# EUROPEAN PATENT SPECIFICATION

(11) **EP 2 648 268 B1**
(45) Date of publication and mention of the grant of the patent: **29.07.2015**
(21) Application number: 11844650.9
(22) Date of filing: 07.11.2011
(51) Int. Cl.: H01M 10/39

(54) **MOLTEN SALT BATTERY**
SCHMELZSALZBATTERIE
ACCUMULATEUR À SEL FONDU

(30) Priority: 30.11.2010 JP 2010267261; 05.09.2011 JP 2011192979
(43) Date of publication of application: 09.10.2013
(73) Proprietor: Sumitomo Electric Industries, Ltd., Chuo-ku Osaka-shi Osaka 541-0041 (JP); Kyoto University, Sakyo-ku Kyoto-shi Kyoto 606-8501 (JP)
(72) Inventor: NITTA, Koji, Osaka-shi Osaka 554-0024 (JP); INAZAWA, Shinji, Osaka-shi Osaka 554-0024 (JP); MAJIMA, Masatoshi, Osaka-shi Osaka 554-0024 (JP); YAMAGUCHI, Atsushi, Osaka-shi Osaka 554-0024 (JP); SAKAI, Shoichiro, Osaka-shi Osaka 554-0024 (JP); FUKUNAGA, Atsushi, Osaka-shi Osaka 554-0024 (JP); HAGIWARA, Rika, Kyoto-shi Kyoto 606-8501 (JP); NOHIRA, Toshiyuki, Kyoto-shi Kyoto 606-8501 (JP); MATSUMOTO, Kazuhiko, Kyoto-shi Kyoto 606-8501 (JP)
(74) Representative: Boult Wade Tennant
(86) International application number: PCT/JP2011/075619
(87) International publication number: WO 2012/073653

(56) References cited:
- EP-A1- 2 477 269
- EP-A1- 2 485 317
- EP-A1- 2 544 267
- WO-A1-03/036751
- WO-A1-2006/101141
- WO-A2-2011/057135
- JP-A- 2002 367 675
- JP-A- 2003 203 674
- JP-A- 2007 517 364
- JP-A- 2008 218 385
- JP-A- 2008 218 385
- JP-A- 2009 067 644

## Description

### TECHNICAL FIELD

The present invention relates to a molten-salt battery using a molten salt as an electrolyte.

### BACKGROUND ART

Utilization of natural energy such as solar power or wind power has been recently promoted. In power generation by natural energy, the amount of power generation is likely to be changed due to the effects of weather conditions or the like. For this reason, the power supply should be leveled by charge/discharge using a storage battery for supplying generated power. That is, a storage battery having high energy density and high efficiency is essential in promoting utilization of natural energy. Such storage batteries include a sodium-sulfur battery disclosed in Patent Document 1. In the sodium-sulfur battery, sodium ions are used as conducting ions. Other storage batteries having high energy density and high efficiency include a molten-salt battery.

Molten-salt batteries are batteries using molten salts as electrolytes and operate in a state where molten salts are molten. As a molten-salt battery, a battery using sodium ions for the conducting ions is known. In such a molten-salt battery, molten salts that contain sodium ions are used as electrolytes. A sodium-sulfur battery should operate at a temperature as high as 280-360°C. Also, a molten-salt battery should operate at the melting point of the molten salt or higher. For this reason, development of a molten-salt battery that operates at a lower temperature has been desired.

The melting point of a molten salt as an electrolyte should be lowered to lower the operating temperature of the molten-salt battery. In general, when two salts are mixed, the melting point is lowered. Thus, it has been considered that a mixed salt in which a sodium salt and another cation salt are mixed is used for a molten-salt battery using a sodium ion as the conducting ion. The mixed salts may include, for example, a mixed salt of sodium salt and potassium salt, a mixed salt of sodium salt and cesium salt or the like. However, when the mixed salt of sodium salt and potassium salt is used, potassium ions enter into a positive-electrode active material in the molten-salt battery. Thereby, the crystal structure of the positive-electrode active material is changed, and the positive electrode may be deteriorated. When a mixed salt of sodium salt and cesium salt is used, the cesium ion may also cause deterioration of the positive electrode. In addition, because cesium is expensive due to its scarcity, the use of cesium increases the cost of the molten-salt battery.

Document JP 2008 218385 A, wich is prior art according to Art. 54(2) EPC, describes, among other elements, a molten salt battery and an ambient temperature molten salt composition which may contain a quaternary ammonium cation.

Document EP 2 477 269 A1, which is prior art relevant for the question of novelty only according to Art. 54(3) EPC, describes, among other elements, a molten salt battery using sodium ions as conducting ions.

### PRIOR ART DOCUMENT

### Patent Document

Patent document 1: Japanese Published Unexamined Application No. 2007-273297

### SUMMARY OF THE INVENTION

### Problems that the Invention is to Solve

The object of the present invention is to provide a molten-salt battery that can lower the operating temperature without deterioration of a positive electrode by using, as an electrolyte, a cation-containing molten salt that does not cause adverse effects on the positive-electrode active material.

### Means for Solving the Problems

In order to solve the problems, according to the first aspect of the present invention, the molten-salt battery using the molten salt comprising the sodium ion as cation for the electrolyte is provided. The molten salt comprises, as anion, an ion, the general chemical structural formula of which is represented by the following formula (1) 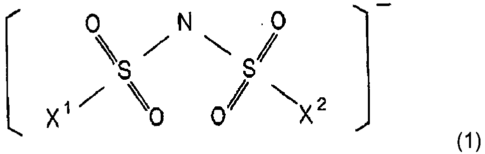 (wherein X¹ and X² are the same or different from each other, and each of them is a fluoro group or a fluoroalkyl group), and comprises, as cation, the sodium ion as well as at least one organic cation included in an organic cation group consisting of; a quaternary ammonium ion, the chemical structural formula of which is represented by the following formula (2) 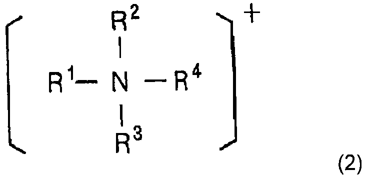 (wherein R¹, R², R³ and R⁴ are the same or different from each other, and each of them is an alkyl group having 1-8 carbon atoms or an alkyloxyalkyl group having 1-8 carbon atoms); an imidazolium ion, the chemical structural formula of which is represented by the following formula (3) 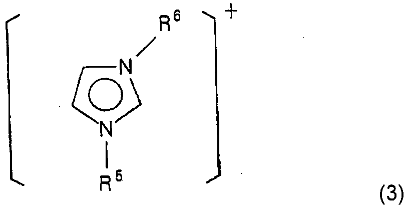 (wherein R⁵ and R⁶ are the same or different from each other, and each of them is an alkyl group having 1-8 carbon atoms); an imidazolinium ion, the chemical structural formula of which is represented by the following formula (4) 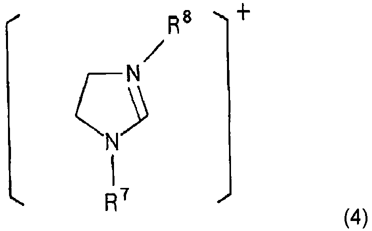 (wherein R⁷ and R⁸ are the same or different from each other, and each of them is an alkyl group having 1-8 carbon atoms); a pyridinium ion, the chemical structural formula of which is represented by the following formula (5) 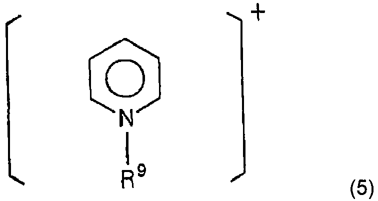 (wherein R⁹ is an alkyl group having 1-8 carbon atoms); a pyrrolidinium ion, the chemical structural formula of which is represented by the following formula (6) 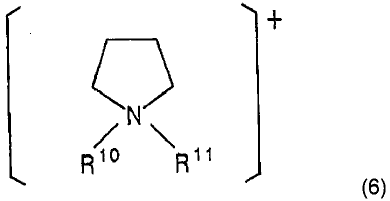 (wherein R¹⁰ and R¹¹ are the same or different from each other, and each of them is an alkyl group having 1-8 carbon atoms); a piperidinium ion, the chemical structural formula of which is represented by the following formula (7) 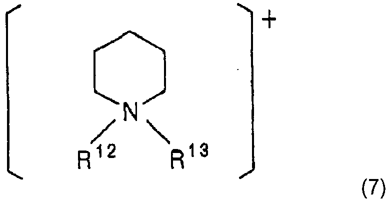 (wherein R¹² and R¹³ are the same or different from each other, and each of them is an alkyl group having 1-8 carbon atoms); a morpholinium ion, the chemical structural formula of which is represented by the following formula (8) 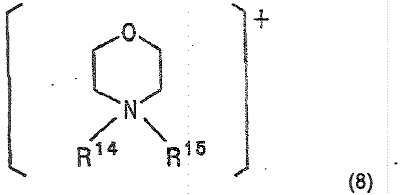 (wherein R¹⁴ and R¹⁵ are the same or different from each other, and each of them is an alkyl group having 1-8 carbon atoms); a phosphonium ion, the chemical structural formula of which is represented by the following formula (9) 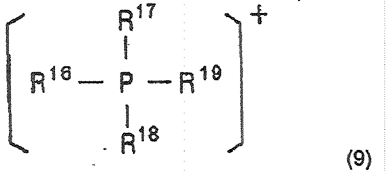 (wherein R¹⁶, R¹⁷, R¹⁸ and R¹⁹ are the same or different from each other, and each of them is an alkyl group having 1-8 carbon atoms, an alkyloxyalkyl group having 1-8 carbon atoms or a phenyl group); a piperazinium ion, the chemical structural formula of which is represented by the following formula 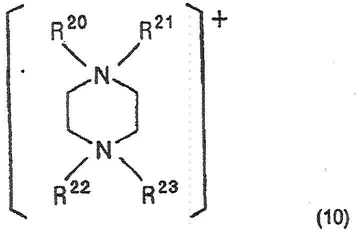 (wherein R²⁰, R²¹, R²² and R²³ are the same or different from each other, and each of them is an alkyl group having 1-8 carbon atoms); and a sulfonium ion, the chemical structural formula of which is represented by the following formula 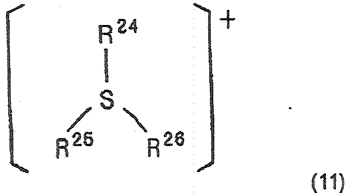 (wherein R²⁴, R²⁵ and R²⁶ are the same or different from each other, and each of them is an alkyl group having 1-8 carbon atoms),
characterised in that the molten salt contains neither potassium ion nor cesium ion.

In accordance with the construction above, the molten salt to be used as the electrolyte in the molten-salt battery comprises, as cation, the sodium ion as well as at least one of the quaternary ammonium ion, the imidazolium ion, the imidazolinium ion, the pyridinium ion, the pyrrolidinium ion, the piperidinium ion, the morpholinium ion, the phosphonium ion, the piperazinium ion and the sulfonium ion. Thereby, the melting point of the molten salt is considerably lower than 280-360°C where the sodium-sulfur battery operates.

In the molten-salt battery, the molten salt preferably comprises, as cation, the sodium ion as well as the quaternary ammonium ion in which R¹, R², R³ and R⁴ of formula (2) are the same or different from each other, and each of them is the alkyl group having 1-6 carbon atoms.

In the molten-salt battery, the molten salt preferably comprises, as cation, the sodium ion as well as the imidazolium ion in which one of R⁵ and R⁶ of formula (3) is the methyl group, and the other one is the alkyl group having 1-6 carbon atoms.

In the molten-salt battery, the molten salt preferably comprises, as cation, the sodium ion as well as the pyrrolidinium ion in which one of R¹⁰ and R¹¹ of formula (6) is the methyl group, and the other one is the alkyl group having 1-6 carbon atoms.

In the molten-salt battery, the molten salt preferably comprises, as cation, the sodium ion as well as the piperidinium ion in which one of R¹² and R¹³ of formula (7) is the methyl group, and the other one is the alkyl group having 1-6 carbon atoms.

In accordance with the construction above, the molten-salt to be used as the electrolyte in the molten salt battery contains neither potassium ion nor cesium ion. Thereby the positive electrode of the molten-salt battery is not deteriorated by said ions.

The molten-salt battery preferably comprises the positive electrode that contains NaCrO₂ as the positive-electrode active material, and the negative electrode that contains tin, sodium or a carbon material as the negative-electrode active material.

### BRIEF DESCRIPTION OF THE DRAWINGS

Fig. 1 is a cross-sectional view of the molten-salt battery according to the present invention.
Fig. 2 is a table that represents molar ratios in mixed salts of TMHA-FSA and NaFSA, and states of each mixed salt in each molar ratio at room temperature.
Fig. 3 is a table that represents molar ratios in a mixed salt of EMI-FSA and NaFSA, and states of each mixed salt in each molar ratio at room temperature.
Fig. 4 is a table that represents molar ratios in a mixed salt of P13-FSA and NaFSA, and states of each mixed salt in each molar ratio at room temperature.
Fig. 5 is a graph that represents charge/discharge properties of the molten-salt battery using the mixed salt of P13-FSA and NaFSA as an electrolyte.
Fig. 6 is a characteristic chart that represents the results of a charging test of the molten-salt battery using Na_{2/3}Fe_{1/3}Mn_{2/3}O₂ for the positive-electrode active material.
Fig. 7 is a characteristic chart that represents the results of a discharging test of the molten-salt battery using Na_{2/3}Fe_{1/3}Mn_{2/3}O₂ for the positive-electrode active material.

### MODES FOR CARRYING OUT THE INVENTION

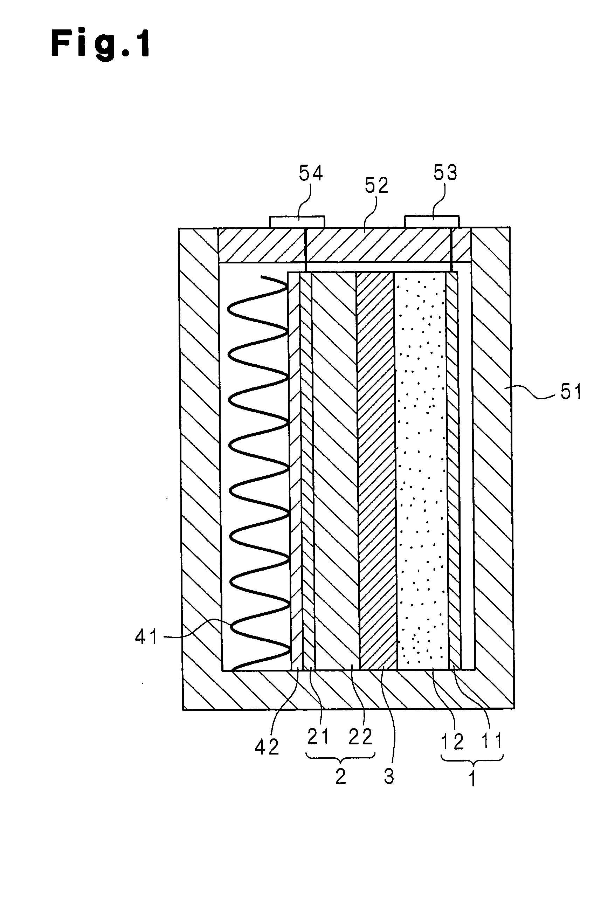

A molten-salt battery according to one embodiment of the present invention will hereinafter be specifically described with reference to Figs. 1 to 7.

As shown in Fig. 1, the molten-salt battery comprises a rectangular parallelepiped box-like battery container 51. An opening is formed at the top of the battery container 51. In the battery container 51, a positive electrode 1, a separator 3 and a negative electrode 2 are arranged. A lid 52 is attached to the battery container 51 so as to close the opening. The positive electrode 1 and the negative electrode 2 are formed in a rectangular plate-like shape. The separator 3 is formed in a sheet-like shape. The separator 3 is inserted between the positive electrode 1 and the negative electrode 2. The positive electrode 1, the separator 3 and the negative electrode 2 are laminated. In addition, the positive electrode 1, the separator 3 and the negative electrode 2 are disposed in a direction perpendicular to the bottom of the battery container 51.

A spring 41 and a presser plate 42 are disposed between the negative electrode 2 and the inner wall of the battery container 51. The spring 41 is made of an aluminum alloy and formed in a corrugated sheet-like shape. The presser plate 42 is inflexible and formed in a plate-like shape. The spring 41 urges the presser plate 42 to press the negative electrode 2 toward the separator 3 and the positive electrode 1. The positive electrode 1 is counteracted by the spring 41. That is, the positive electrode 1 is pressed from the inner wall of the battery container 51 on opposite side of the spring 41 toward the separator 3 and the negative electrode 2. The spring 41 is not limited to metal springs or the like, and for example may be an elastic body like a rubber. When the positive electrode 1 or the negative electrode 2 swells or contracts by charge/discharge, volume change of the positive electrode 1 or the negative electrode 2 is absorbed by expansion and contraction of the spring 41.

The positive electrode 1 is formed by applying a positive-electrode material 12 on a positive-electrode current collector 11. The positive-electrode current collector 11 is made of aluminum and formed in a rectangular plate-like shape. The positive-electrode material 12 comprises the positive-electrode active material like NaCrO₂ and a binder. It should be noted that the positive-electrode active material is not limited to NaCrO₂. The negative electrode 2 is formed by plating a negative-electrode material 22 on a negative-electrode current collector 21. The negative-electrode current collector 21 is made of aluminum and formed in a rectangular plate-like shape. A negative-electrode material 22 comprises the negative-electrode active material like tin. When the negative-electrode material 22 is plated on the negative-electrode current collector 21, zincate treatment is conducted. In detail, it is plated with zinc, followed by tin as a foundation. The negative-electrode active material is not limited to tin and for example may be a metallic sodium, a carbon material, silicon or indium. The negative-electrode material 22 is formed by applying for example, a negative-electrode active material powder that contains the binder on negative-electrode current collector 21. Preferably, the positive-electrode active material is NaCrO₂, and the negative-electrode active material is tin, a metallic sodium or a carbon material. The carbon material is mainly composed of carbon, preferably a hard carbon. The positive-electrode current collector 11 and the negative-electrode current collector 21 are not limited to aluminum, and for example may be stainless steel or nickel. The separator 3 is composed of an insulating material such as a silica glass or a resin. The separator 3 comprises the electrolyte inside and is formed in a form that the sodium ion can pass through. The separator 3 is made of, for example, a glass fabrics or a porous resin.

In the battery container 51, the positive-electrode material 12 of the positive electrode 1 and the negative-electrode material 22 of the negative electrode 2 face each other. The separator 3 is inserted between the positive electrode 1 and the negative electrode 2. The separator 3 is impregnated with the molten salt as the electrolyte. The molten salt in the separator 3 is in contact with both the positive-electrode material 12 of the positive electrode 1 and the negative-electrode material 22 of the negative electrode 2. The inner face of the battery container 51 is coated with an insulating resin to prevent short-circuiting between the positive electrode 1 and the negative electrode 2. On the outer side of the lid 52, a positive terminal 53 and a negative terminal 54, which are connected to an external terminal, are installed. The positive terminal 53 and the negative terminal 54 are insulated from each other. Also, the inner side of the lid 52 is insulated by an insulating coat or the like. The upper end portion of the positive-electrode current collector 11 is connected to the positive terminal 53 through the lead wire. The upper end portion of the negative-electrode current collector 21 is connected to the negative terminal 54 through the lead wire. The lead wire is insulated from the lid 52. The lid 52 is attached to the battery container 51.

The molten salt infiltrating in the separator 3 is an ionic salt composed of sodium ion-containing cations and anions. The composition of the molten salt will be described later. The molten salt is molten at a temperature of its melting point or higher and becomes a conductive liquid containing the sodium ion. The molten-salt battery can operate as a secondary battery within a temperature range where the molten salt is molten. At this time, for the molten-salt battery, a molten salt containing the sodium ion is used as an electrolytic solution. During discharge, the sodium ion transfers from the negative electrode 2 to the positive electrode 1 in the electrolytic solution and is absorbed in the positive-electrode active material.

Next, the composition of the molten salt will be described.

The general chemical structural formula of the anion in the molten salt is represented by formula (1) mentioned above. In the formula (1), each of X¹ and X² is the fluoro group or the fluoroalkyl group. X¹ and X² may be the same or different from each other. In the anion represented by formula (1 each of X¹ and X² is preferably the fluoro group or the fluoroalkyl group having 1-8 carbon atoms. More preferably, the anion is an anion in which both X¹ and X² are the fluoro group, an anion in which both X¹ and X² are the fluoromethyl group, or an anion in which one of X¹ and X² is the fluoro group and the other one is the fluoromethyl group. When both X¹ and X² are the fluoro group, the anion is an FSA (bis-fluoro-sulfonylamide) ion. The chemical structural formula of the FSA ion is represented by the following formula (12). The FSA ion has two fluoro groups.

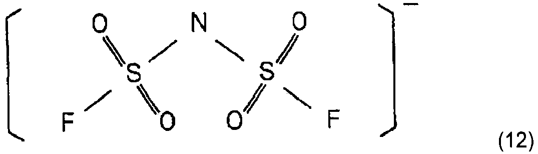

In formula (1), when both X¹ and X² are trifluoromethyl groups, the anion is a TFSA (bis-trifluoro-methylsulfonylamide) ion. The chemical structural formula of the TFSA ion is represented by the following formula (13). The TFSA ion has two trifluoromethyl groups.

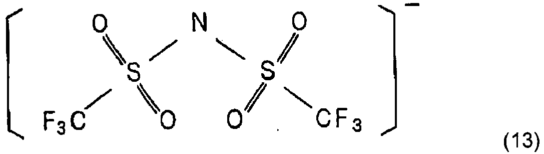

In formula (1) mentioned above, when one of X¹ and X² is the fluoro group and the other one is the trifluoromethyl group, the anion is an FTA (fluoro-trifluoro-methylsulfonylamide) ion. The chemical structural formula of the FTA ion is represented by the following formula (14). The FTA ion has the fluoro group and the trifluoromethyl group.

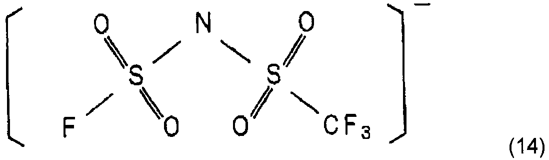

The molten salt comprises, for example, the FSA ion, the TFSA ion or the FTA ion as anion. In addition, the anion may be an anion that has a fluoroalkyl group other than trifluoromethyl groups.

In addition, the molten salt contains the sodium ion as cation, and further at least one organic cation included in an organic cation group consisting of the quaternary ammonium ion, the imidazolium ion, the imidazolinium ion, the pyridinium ion, the pyrrolidinium ion, the piperidinium ion, the morpholinium ion, the phosphonium ion, the piperazinium ion and the sulfonium ion.

The general chemical structural formula of the quaternary ammonium ion is represented by formula (2) described above. In formula (2), R¹, R², R³ and R⁴ are each the alkyl group having 1-8 carbon atoms or the alkyloxyalkyl group having 1-8 carbon atoms. R¹, R², R³ and R⁴ may be the same or different from each other. In the quaternary ammonium ion, each of R¹, R², R³ and R⁴ is preferably the alkyl group having 1-6 carbon atoms. Since the molten salt containing the quaternary ammonium ion in which each of R¹, R², R³ and R⁴ is the alkyl group having 1-6 carbon atoms is excellent in resistance to reduction, it can stably coexist with sodium metals. This molten salt expresses excellent durability when used as the electrolyte for the molten-salt battery. The specific preferable examples include a trimethyl-n-hexylammonium ion, a trimethyl-n-octylammonium ion, an ethyldimethylpropylammonium ion and a methyl (2-methoxyethyl) dimethylammonium ion. For example, the chemical structural formula of the TMHA (trimethyl-n-hexylammonium) ion is represented by the following formula (15). The TMHA ion has three methyl groups and one hexyl group.

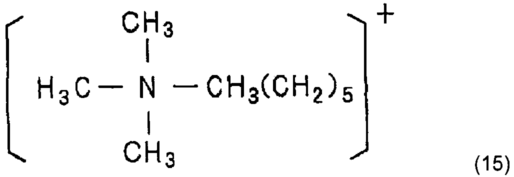

The molten salt using the TMHA ion is a mixed salt of a salt that contains the TMHA ion as cation and a salt that contains the sodium ion as cation. For example, the molten salt is a mixed salt of a TMHA-FSA salt, which contains the TMHA ion as cation and the FSA as anion, and of a NaFSA salt, which contains the sodium ion as cation and the FSA as anion. In addition, the quaternary ammonium ion to be used in the present invention may have other alkyl groups.

The general chemical structural formula of the imidazolium ion is represented by formula (3) described above. In formula (3), each of R⁵ and R⁶ is the alkyl group having 1-8 carbon atoms. R⁵ and R⁶ may be the same or different from each other. In the imidazolium ion represented by formula (3), an imidazolium ion in which one of the R⁵ and R⁶ in formula (3) is the methyl group and the other one is the alkyl group having 1-6 carbon atoms is preferable. Since such an imidazolium ion-containing molten salt is excellent in resistance to reduction, it can stably coexist with sodium metals and express excellent durability when used as the electrolyte for the molten-salt battery. In addition, since the molten salt tends to show a particularly low melting point, the molten-salt battery can be operated from a low temperature. The specific preferable examples include a 1-ethyl-3-methylimidazolium ion, a 1-propyl-3-methylimidazolium ion, a 1-butyl-3-methylimidazolium ion, a 1-hexyl-3-methylimidazolium ion and a 1,3-dimethylimidazolium ion. The chemical structural formula of the EMI (1-ethyl-3-methylimidazolium) ion is represented by the following formula (16). In the EMI ion represented by formula (3) described above, R⁵ is the ethyl group and R⁶ is the methyl group.

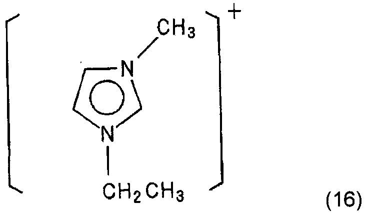

In addition, the chemical structural formula of the BMI (1-butyl-3-methylimidazolium) ion is represented by the following formula (17). In the BMI ion represented by formula (3) described above, R⁵ is the butyl group and R⁶ is the methyl group.

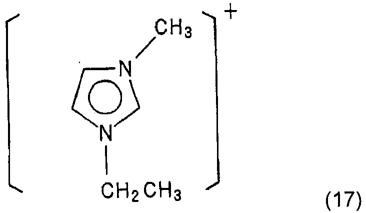

The molten salt using the imidazolium ion is a mixed salt of a salt that contains the imidazolium ion as cation and a salt that contains the sodium ion as cation. For example, the molten salt is a mixed salt of an EMI-FSA salt that contains the EMI ion as cation and the FSA as anion and of NaFSA. In addition, the imidazolium ion may have other alkyl groups.

The general chemical structural formula of the imidazolinium ion is represented by formula (4) described above. In formula (4), each of R⁷ and R⁸ is the alkyl group having 1-8 carbon atoms. R⁷ and R⁸ may be the same or different from each other.

The general chemical structural formula of the pyridinium ion is represented by formula (5) described above. In formula (5), R⁹ is the alkyl group having 1-8 carbon atoms. The preferable examples of the pyridinium ion include a 1-methylpyridinium ion, a 1-ethylpyridinium ion, a 1-propylpyridinium ion and a 1-butylpyridinium ion. The chemical structural formula of the BPy (1- butylpyridinium) ion is represented by the following formula (18).

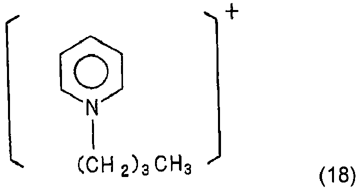

In the BPy ion represented by formula (5) described above, R⁹ is the butyl group. In addition, the pyridinium ion represented by formula (5) may have other alkyl groups.

The general chemical structural formula of the pyrrolidinium ion is represented by formula (6) described above. In formula (6), each of R¹⁰ and R¹¹ is the alkyl group having 1-8 carbon atoms. R¹⁰ and R¹¹ may be the same or different from each other. In the pyrrolidinium ion, preferably, one of R¹⁰ and R¹¹ is the methyl group, and the other one is the alkyl group having 1-6 carbon atoms. Since the molten salt containing the pyrrolidinium ion in which one of R¹⁰ and R¹¹ is the methyl group and the other one is the alkyl group having 1-6 carbon atoms is excellent in resistance to reduction, it can stably coexist with sodium metals. This molten salt expresses excellent durability when used as the electrolyte for the molten-salt battery. In addition, since the molten salt tends to show a particularly low melting point, the molten-salt battery can be operated from a low temperature. The specific preferable examples include a 1-methyl-1-ethylpyrrolidinium ion, a 1-methyl-1-propylpyrrolidinium ion and a 1-methyl-1-butylpyrrolidinium ion. The chemical structural formula of the 1-methyl-1-butylpyrrolidinium ion is represented by the following formula (19).

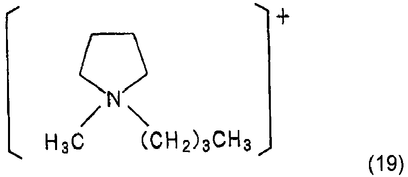

In the 1-methyl-1-butylpyrrolidinium ion represented by formula (6) described above, R¹⁰ is the methyl group and R¹¹ is the butyl group. Additionally, in the P13 (1-methyl-1-propylpyrrolidinium) ion represented by formula (6) described above, R¹⁰ is the methyl group and R¹¹ is the propyl group. The molten salt using the pyrrolidinium ion is a mixed salt of a salt that contains the pyrrolidinium ion as cation and of a salt that contains the sodium ion as cation. For example, the molten salt is a mixed salt of a P13-FSA salt that contains the P13 ion as cation and the FSA as anion and of NaFSA. In addition, the pyrrolidinium ion may have other alkyl groups.

The general chemical structural formula of the piperidinium ion is represented by formula (7) described above. In formula (7), each of R¹² and R¹³ is the alkyl group having 1-8 carbon atoms. R¹² and R¹³ may be the same or different from each other. In the piperidinium ion, preferably, one of R¹² and R¹³ is the methyl group, and the other one is the alkyl group having 1-6 carbon atoms. Since the molten salt containing the piperidinium ion in which one of R¹² and R¹³ is the methyl group and the other one is the alkyl group having 1-6 carbon atoms is excellent in resistance to reduction, it can stably coexist with sodium metals. This molten salt expresses excellent durability when used as the electrolyte for the molten-salt battery. In addition, since the molten salt tends to show a particularly low melting point, the molten-salt battery can be operated from a low temperature. The specific preferable examples include a 1,1-dimethylpiperidinium ion, a 1-methyl-1-ethylpiperidinium ion and a 1-methyl-1-propylpiperidinium ion.

The general chemical structural formula of the morpholinium ion is represented by formula (8) described above. In formula (8), each of R¹⁴ and R¹⁵ is the alkyl group having 1-8 carbon atoms. R¹⁴ and R¹⁵ may be the same or different from each other. The preferable examples of the morpholinium ion include a 1,1-dimethylmorpholinium ion, a 1-methyl-1-ethylmorpholinium ion, a 1-methyl-1-propylmorpholinium ion and a 1-methyl-1-butylmorpholinium ion.

The general chemical structural formula of the phosphonium ion is represented by formula (9) described above. In formula (9), each of R¹⁶, R¹⁷, R¹⁸ and R¹⁹ is the alkyl group having 1-8 carbon atoms, the alkyloxyalkyl group having 1-8 carbon atoms or the phenyl group. R¹⁶, R¹⁷, R¹⁸ and R¹⁹ may be the same or different from each other. The preferable examples of the phosphonium ion include a triethyl (methoxyethyl) phosphonium ion and a methyltriphenylphosphonium ion.

The general chemical structural formula of the piperazinium ion is represented by formula (10) described above. In formula (10), each of R²⁰, R²¹, R²² and R²³ is the alkyl group having 1-8 carbon atoms. R²⁰, R²¹, R²² and R²³ may be the same or different from each other. The preferable examples of the piperazinium ion include a 1,1,4,4-tetramethylpiperazinium ion and a 1,1-dimethyl-4,4-diethylpiperazinium ion.

The general chemical structural formula of the sulfonium ion is represented by formula (11) described above. In formula (11), each of R²⁴ R²⁵ and R²⁶ is the alkyl group having 1-8 carbon atoms. R²⁴, R²⁵ and R²⁶ may be the same or different from each other. The preferable examples of the sulfonium ion include a trimethylsulfonium ion and a triethylsulfonium ion, a methyldiethylsulfonium ion and a methyldipropylsulfonium ion.

As stated above, the molten salt used for the molten-salt battery of the present invention comprises, as cation, the sodium ion as well as at least one organic cation included in an organic cation group consisting of the quaternary ammonium ion, the imidazolium ion, the imidazolinium ion, the pyridinium ion, the pyrrolidinium ion, the piperidinium ion, the morpholinium ion, the phosphonium ion, the piperazinium ion and the sulfonium ion. That is, the molten salt is a mixture of a salt that contains the sodium ion as cation and of one or more salts that contains the quaternary ammonium ion, the imidazolium ion, the imidazolinium ion, the pyridinium ion, the pyrrolidinium ion, the piperidinium ion, the morpholinium ion, the phosphonium ion, the piperazinium ion or the sulfonium ion as cation. Previous studies have demonstrated that the melting point of the molten salt comprising the anion that has the chemical structural formula shown in formula (1), and the cation, which is the quaternary ammonium ion, the imidazolium ion, the imidazolinium ion, the pyridinium ion, the pyrrolidinium ion, the piperidinium ion, the morpholinium ion, the phosphonium ion, the piperazinium ion or the sulfonium ion is considerably lower than 280-360°C where the sodium-sulfur battery operates. In addition, the molten salt to be used for the molten-salt battery of the present invention is a mixture of various salts. Thus, the melting point of the molten salt is lower compared to a molten salt consisting of one kind of salt. Consequently, the melting point of the molten salt to be used for the molten-salt battery of the present invention is considerably lower than 280-360°C where the sodium-sulfur battery operates. For these reasons, the operating temperature of the molten-salt battery of the present invention can be considerably lowered than that of the sodium-sulfur battery.

Additionally, the molten salt to be used for the molten-salt battery of the present invention contains no potassium ion. The potassium ion enters into the positive-electrode active material in the positive-electrode material 12. Also, the potassium ion changes the crystal structure of the positive-electrode active material and causes deterioration of the positive electrode 1. Neither does the molten salt to be used for the molten-salt battery of the present invention contain the cesium ion. Like the potassium ion, the cesium ion also causes deterioration of the positive electrode 1. Thus, since the molten salt of the present invention contains neither the potassium ion nor the cesium ion, the positive electrode 1 of the molten-salt battery is neither deteriorated by the potassium ion nor the cesium ion. In addition, since the quaternary ammonium ion, the imidazolium ion, the imidazolinium ion, the pyridinium ion, the pyrrolidinium ion, the piperidinium ion, the morpholinium ion, the phosphonium ion, the piperazinium ion or the sulfonium ion does not enter the positive-electrode active material in the positive-electrode material 12, the positive electrode 1 is not deteriorated. Thus, the molten salt of the present invention contains no component that deteriorates the positive electrode 1. Thereby, the operating temperature of the molten-salt battery can be considerably lowered than that of the sodium-sulfur battery, while a decrease in the volume of the molten-salt battery is prevented. Furthermore, the molten salt does not comprise expensive cesium ions. Thereby, an increase in the cost of the molten-salt battery can also be prevented.

### Embodiments

Subsequently, embodiments will be more specifically explained with reference to the following first to fifth embodiments.

### (First Embodiment)

As a molten salt, a mixed salt of TMHA-FSA and NaFSA was prepared. Then states of the mixed salt at room temperature were investigated in relation to the molar ratios of the TMHA-FSA and the NaFSA in the mixed salt. First, a TMHA-Br produced by Wako Pure Chemical Industries, Ltd. and a KFSA produced by Mitsubishi Materials Electronic Chemicals Co.,Ltd. were mixed in an equimolar ratio in water for preparing a TMHA-FSA. Then a resulting precipitate was filtrated and washed with water repeatedly several times. Subsequently, the TMHA-FSA was prepared by vacuum drying at 80°C. It should be noted that Br is bromine and K is potassium. The prepared TMHA-FSA and a NaFSA produced by Mitsubishi Materials Electronic Chemicals Co.,Ltd. were mixed in various molar ratios in a glove box under an argon atmosphere to investigate its melting behavior at room temperature.

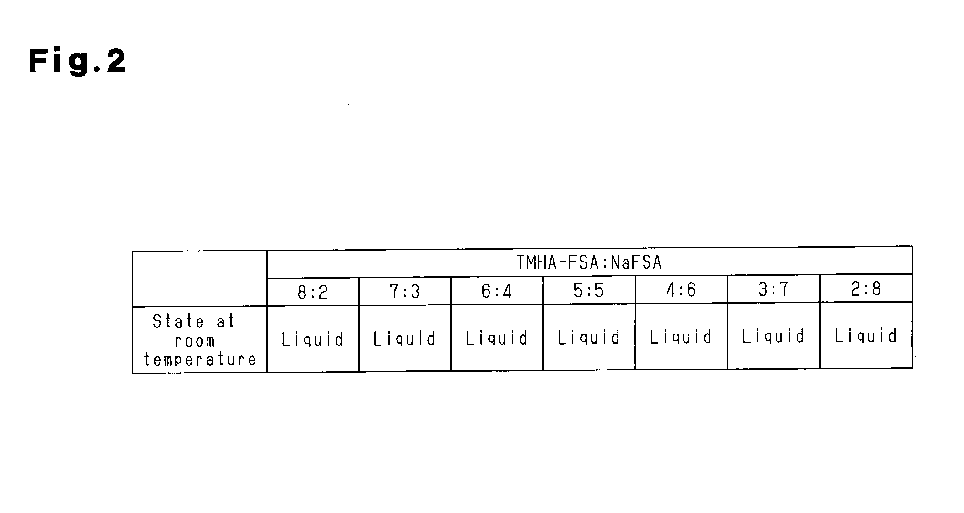

Fig. 2 is a table that represents molar ratios in the mixed salts of TMHA-FSA and NaFSA, and states of the mixed salts in each molar ratio at room temperature. As shown in Fig. 2, seven mixed salts that the molar ratios of the TMHA-FSA and the NaFSA (TMHA-FSA:NaFSA) were respectively 8:2, 7:3, 6:4, 5:5, 4:6, 3:7 and 2:8 were prepared. Any mixed salts were liquid at room temperature. These results demonstrate that melting points of respective mixed salts are lower than 280-360°C where the sodium-sulfur battery operates.

### (Second Embodiment)

As a molten salt, a mixed salt of EMI-FSA and NaFSA was prepared. Then states of the mixed salt at room temperature were investigated in relation to the molar ratios of the EMI-FSA and the NaFSA in the mixed salt. The EMI-FSA was obtained from Tokyo Chemical Industry Co., Ltd. The EMI-FSA and a NaFSA produced by Mitsubishi Materials Electronic Chemicals Co., Ltd. were mixed in various molar ratios in the glove box under the argon atmosphere to investigate its melting behavior at room temperature.

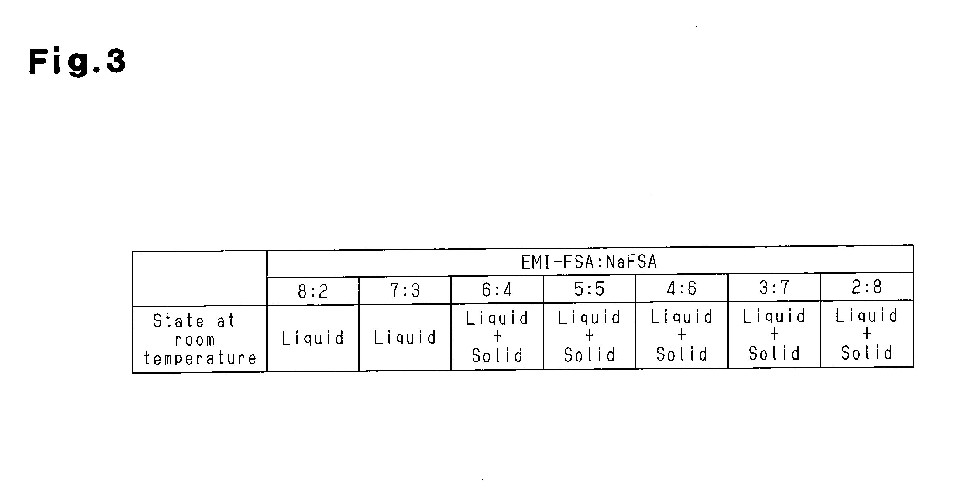

Fig. 3 is a table that represents molar ratios in the mixed salts of EMI-FSA and NaFSA, and states of the mixed salts in each molar ratio at room temperature. As shown in Fig. 3, seven mixed salts that the molar ratios of the EMI-FSA and the NaFSA (EMI-FSA:NaFSA) were respectively 8:2, 7:3, 6:4, 5:5, 4:6, 3:7 and 2:8 were prepared. The mixed salts that the molar ratios were respectively 8:2 and 7:3 were liquid at room temperature. In addition, the mixed salts of other molar ratios were in a state where liquid and solid were mixed at room temperature. These results demonstrate that any melting points of the mixed salts are lower than 280-360°C where the sodium-sulfur battery operates.

### (Third Embodiment)

As a molten salt, a mixed salt of P13-FSA and NaFSA was prepared. Then states of the mixed salt at room temperature were investigated in relation to the molar ratios of the P13-FSA and the NaFSA in the mixed salt. The P13-FSA was obtained from Tokyo Chemical Industry Co., Ltd. The P13-FSA and the NaFSA produced by Mitsubishi Materials Electronic Chemicals Co.,Ltd. were mixed in various molar ratios in the glove box under the argon atmosphere to investigate its melting behavior at room temperature.

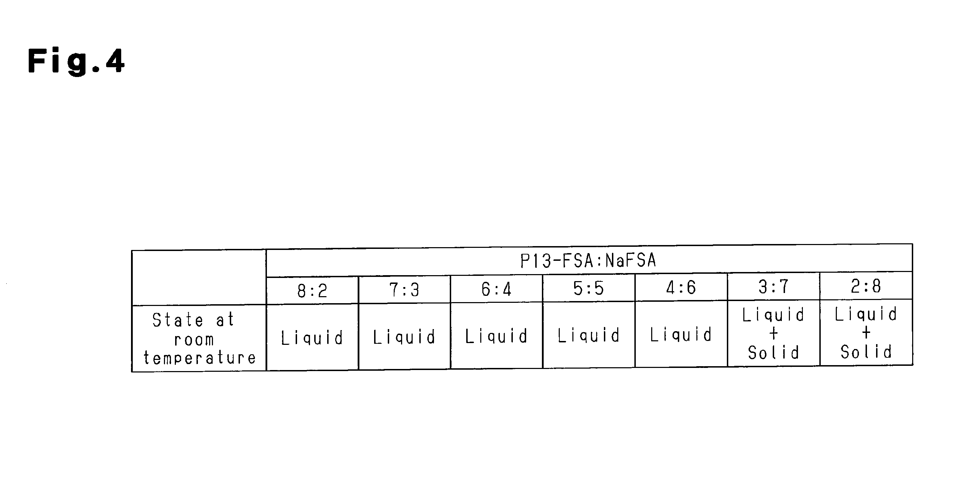

Fig. 4 is a table that represents molar ratios in the mixed salts of P13-FSA and NaFSA, and states of the mixed salt in each molar ratio at room temperature. As shown in Fig. 4, seven mixed salts that the molar ratios of the P13-FSA and the NaFSA (P13-FSA:NaFSA) were respectively 8:2, 7:3, 6:4, 5:5, 4:6, 3:7 and 2:8 were prepared. Each mixed salt that the molar ratio was respectively 8:2, 7:3, 6:4, 5:5 and 4:6 was liquid at room temperature. In addition, the molten salts of other molar ratios were in a state where liquid and solid were mixed at room temperature. These results demonstrate that any melting points of the mixed salts are lower than 280-360°C where the sodium-sulfur battery operates.

### (Fourth Embodiment)

The charge/discharge properties of the molten-salt battery using the mixed salt of P13-FSA and NaFSA as the electrolyte were investigated. First, NaCO₃ produced by Wako Pure Chemical Industries, Ltd. and a CrO₂ produced by Wako Pure Chemical Industries, Ltd. were mixed in a molar ratio of 1:1 for preparing NaCrO₂. Next, the mixture of NaCO₃ and CrO₂ was pelletized, and the resulting product was burnt under an argon stream at 1223K for 5 hours, resulting in NaCrO₂. Then, NaCrO₂, acetylene black and PTFE (polytetrafluoroethylene) were kneaded in a volume ratio of 80:15:5 to produce the positive-electrode material 12. Subsequently, an aluminum mesh as the positive-electrode current collector 11 was prepared, on which the positive-electrode material 12 was bonded by pressure to produce the positive electrode 1. In addition, the P13-FSA and the NaFSA were mixed in a molar ratio of 1:1 in the glove box under the argon atmosphere to prepare a mixed salt as the electrolyte. Then a glass mesh was immersed in the prepared mixed salt to produce the separator 3. In addition, the negative-electrode current collector 21 made of aluminum was prepared, on which tin as the negative-electrode active material was plated to produce the negative electrode 2. Then a lower plate made of stainless steel was prepared, on which the positive electrode 1 was disposed with the positive-electrode material 12 up. Then the separator 3 was disposed on the positive electrode 1, and the negative electrode 2 was disposed on the separator 3. Furthermore, an upper cover made of stainless steel was disposed on the negative electrode 2. Eventually, the upper cover was fixed to the lower plate by a bolt and a nut to produce a battery to be used for fourth embodiment.

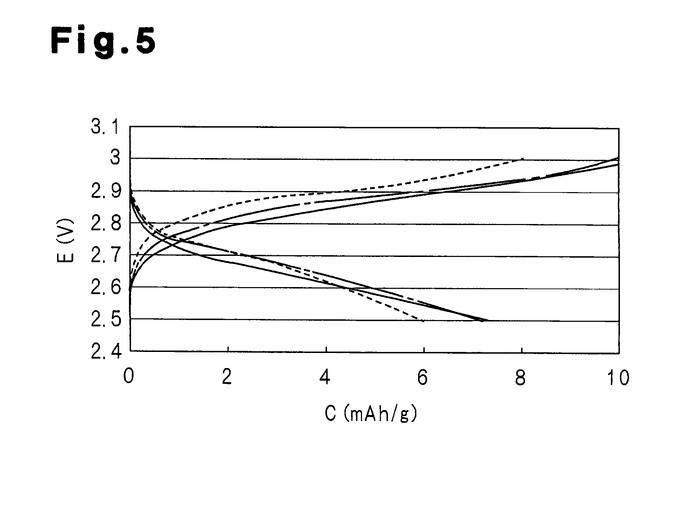

Fig. 5 is a graph that represents the charge/discharge properties of the molten-salt battery using the mixed salt of P13-FSA and NaFSA as the electrolyte. In this embodiment, a four-cycle charge/discharge test for the produced battery was carried out. In this test, an operating temperature was set to room temperature, a voltage in starting the charging was set to 2.5 V, and a voltage in starting the discharging was set to 3 V. Additionally, a charging/discharging rate was set to 0.1 C. In Fig. 5, the horizontal axis represents the capacity, and the vertical axis represents the voltage of the molten-salt battery. The upward-sloping curves shown in Fig. 5 represent the charge properties, and the downward-sloping curves represent the discharge properties. In Fig. 5, the properties of the second charging/discharging were represented by continuous lines, the properties of the third charging/discharging were represented by dashed-dotted lines, and the properties of the fourth charging/discharging were represented by dashed lines. As shown in Fig. 5, even when the operating temperature was room temperature, the molten-salt battery could charge and discharge, and the charging and discharging could be repeated with the approximately-same properties. From these results, it could be confirmed that the molten-salt battery of the present invention could operate at a lower temperature than 280-360°C where the sodium-sulfur battery operated.

### (Fifth embodiment)

An embodiment using a material other than NaCrO₂ as the positive-electrode active material will be explained. A mixed salt of 1-methyl-1-propylpyrrolidinium-FSA and NaFSA was used as the electrolyte. The Na_{2/3}Fe_{1/3}Mn_{2/3}O₂ was used for the positive-electrode active material. The molten-salt battery having thus obtained positive electrode 1 was used to investigate the charge/discharge properties. The molten salt used for the electrode was adjusted by mixing the 1-methyl-1-propylpyrrolidinium-FSA and the NaFSA in a molar ratio of 1:1. The battery used for the experiment was a half cell that comprised a reference electrode using a metallic sodium and a positive electrode 1 using the Na_{2/3}Fe_{1/3}Mn_{2/3}O₂ as the positive-electrode active material. The positive electrode 1 was formed by applying the positive-electrode material 12 on the rectangular plate-like positive-electrode current collector 11 made of aluminum. The positive-electrode material 12 comprises the Na_{2/3}Fe_{1/3}Mn_{2/3}O₂ and the binder. In this embodiment, a constant current was applied while the temperature of the battery was set at 353K (80°C) for charge and discharge of the battery. In this case, the current value per unit mass of the positive-electrode active material in the positive electrode 1 was set to 5 mA/g.

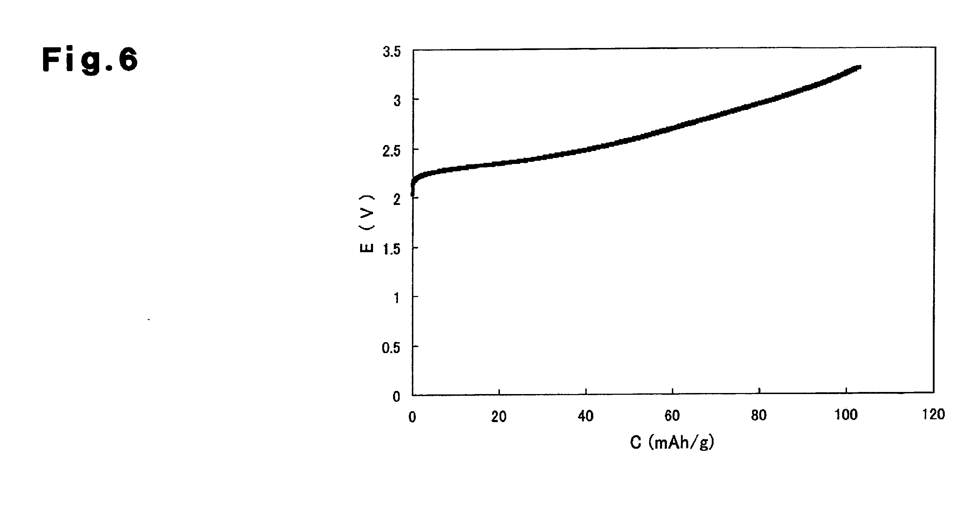

Fig. 6 represents the results of the charging test of the molten-salt battery using the Na_{2/3}Fe_{1/3}Mn_{2/3}O₂ for the positive-electrode active material. The horizontal axis in Fig. 6 represents the battery capacity during charging. The vertical axis in Fig. 6 represents the voltage generated between the positive electrode 1 and the reference electrode during charging. The capacity is represented as the value per unit mass of the positive-electrode active material in the positive electrode 1. Fig. 6 represents a charging curve obtained by the experiment. As shown in Fig. 6, the experiment resulted in 103 mAh/g of the charging capacity.

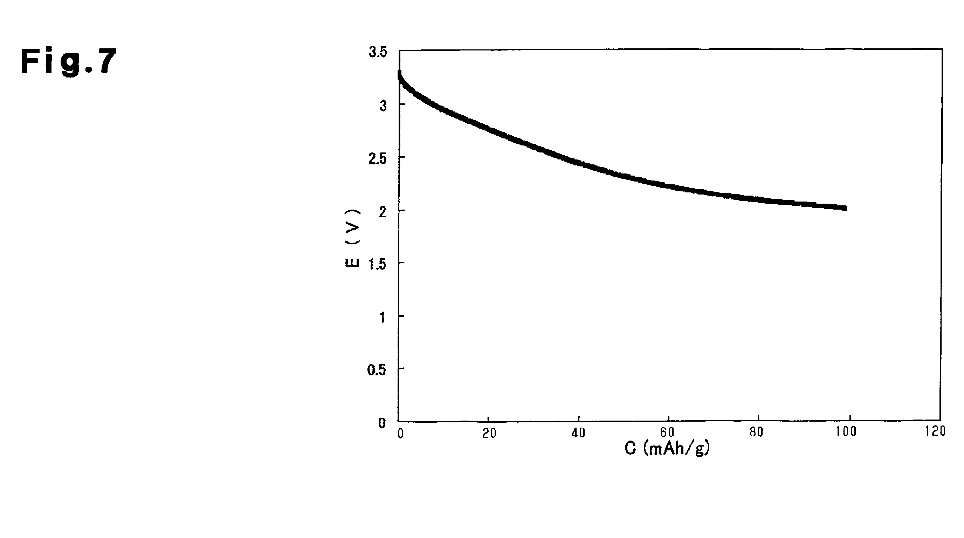

Fig. 7 represents the results of the discharging test of the molten-salt battery using the Na_{2/3}Fe_{1/3}Mn_{2/3}O₂ for the positive-electrode active material. The horizontal axis in Fig. 7 represents the battery capacity during discharging. The vertical axis in Fig. 7 represents the voltage generated between the positive electrode 1 and the reference electrode during discharging. Fig. 7 represents the discharging curve obtained by the experiment. As shown in Fig. 7, the experiment resulted in 98.7 mAh/g of the discharging capacity. Consequently, the coulombic efficiency of the battery used for experiment was 96%. As apparent from the Fig. 6 and Fig. 7, the sodium ion transferred, which allowed charge and discharge, even in the case of the molten-salt battery in which the mixed salt of 1-methyl-1-propylpyrrolidinium-FSA and NaFSA was used as the electrolyte and the Na_{2/3}Fe_{1/3}Mn_{2/3}O₂ was used for the positive-electrode active material.

As stated above, the molten-salt battery of the present invention can operate at a considerably lower temperature than that of the sodium-sulfur battery without a decrease in the capacity. Since the molten-salt battery operates at a low temperature, energy supplied for operating the molten-salt battery is reduced, and energy efficiency of the molten-salt battery is improved. Also, the safety of the molten-salt battery is improved due to the lowered operating temperature. Additionally, time and trouble for heating the molten-salt battery to the operating temperature can be saved. Hence, convenience of the molten-salt battery is improved. Consequently, utilization of the molten-salt battery of the present invention can realize an electric storage device having high energy density, high efficiency, and excellent safety and convenience. Also, the molten salt to be used for the molten-salt battery of the present invention is non-volatile and non-combustible. Thereby, the electric storage device with excellent safety can be realized. In addition, the molten salt to be used for the molten-salt battery of the present invention has high concentration of the sodium ion. Thereby, the sodium ion adjacent to the active material is hardly to be lost during charging and discharging, allowing the charge and discharge to be fast.

In addition, the molten-salt battery of the present invention may be formed in any form other than a rectangular parallelepiped shape. For example, the molten-salt battery may be formed in a circular cylindrical shape by forming the negative electrode 2 into a circular cylindrical shape and by disposing the separator 3 in a cylindrical shape and the positive electrode 1 around the negative electrode 2.

## Claims

1. A molten-salt battery in which a molten salt containing a sodium ion as cation is used for an electrolyte, wherein the molten salt comprises, as anion, an ion, the general chemical structural formula of which is represented by the following formula (1) 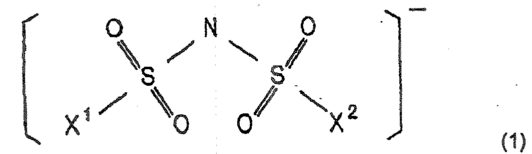 wherein X¹ and X² are the same or different from each other, and each of them is a fluoro group or a fluoroalkyl group, and comprises, as cation, the sodium ion as well as at least one organic cation included in an organic cation group consisting of: a quaternary ammonium ion, the 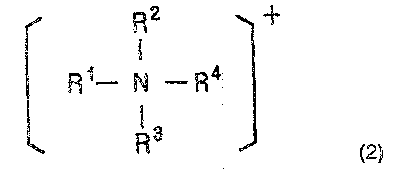 wherein R¹, R², R³ and R⁴ are the same or different from each other, and each of them is an alkyl group having 1-8 carbon atoms or an alkyloxyalkyl group having 1-8 carbon atoms; an imidazolium ion, the chemical structural formula of which is represented by the following formula (3) 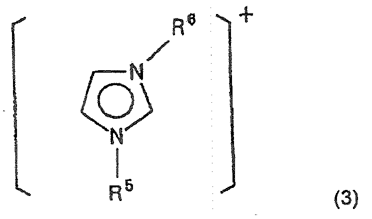 wherein R⁵ and R⁶ are the same or different from each other, and each of them is an alkyl group having 1-8 carbon atoms; an imidazolium ion, the chemical structural formula of which is represented by the following formula (4) 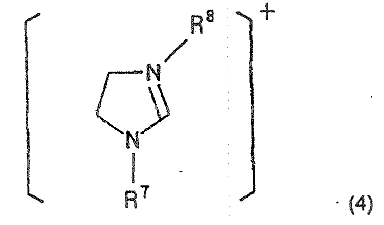 wherein R⁷ and R⁸ are the same or different from each other, and each of them is an alkyl group having 1-8 carbon atoms; a pyridinium ion, the chemical structural formula of which is represented by the following formula (5) 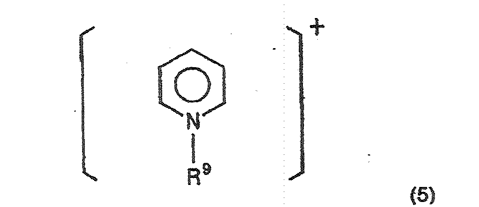 wherein R⁹ is an alkyl group having 1-8 carbon atoms; a pyrrolidinium ion, the chemical structural formula of which is represented by the following formula (6) 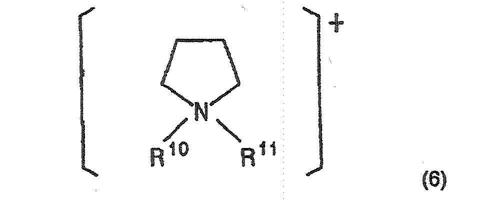 wherein R¹⁰ and R¹¹ are the same or different from each other, and each of them is an alkyl group having 1-8 carbon atoms; a piperidinium ion, the chemical structural formula of which is represented by the following formula (7) 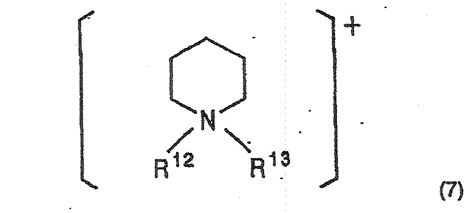 wherein R¹² and R¹³ are the same or different from each other, and each of them is an alkyl group having 1-8 carbon atoms; a morpholinium ion, the chemical structural formula of which is represented by the following formula (8) 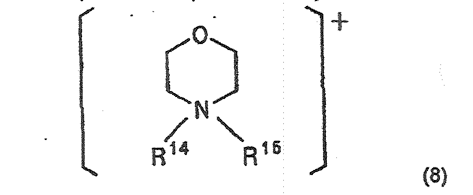 wherein R¹⁴ and R¹⁵ are the same or different from each other, and each of them is an alkyl group having 1-8 carbon atoms; a phosphonium ion, the chemical structural formula of which is represented by the following formula (9) 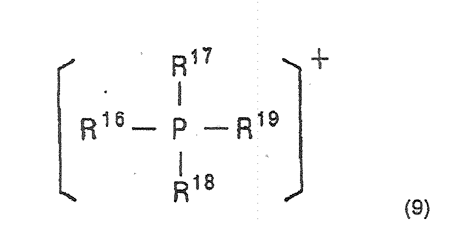 wherein R¹⁶, R¹⁷, R¹⁸ and R¹⁹ are the same or different from each other, and each of them is an alkyl group having 1-8 carbon atoms, an alkyloxyalkyl group having 1-8 carbons atoms or a phenyl group; a piperazinium ion, the chemical structural formula of which is represented by the following formula (10) 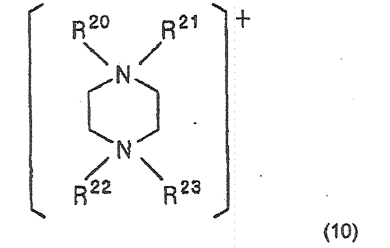 wherein R²⁰, R²¹, R²² and R²³ are the same or different from each other, and each of them is an alkyl group having 1-8 carbon atoms; and a sulfonium ion, the chemical structural formula of which is represented by the following formula (11) 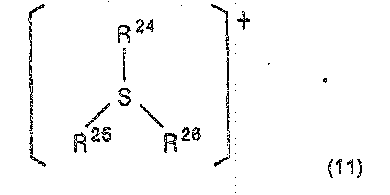 wherein R²⁴, R²⁵ and R²⁶ are the same or different from each other, and each of them is an alkyl group having 1-8 carbon atoms,
**characterised in that** the molten salt contains neither potassium ion nor cesium ion.

2. The molten-salt battery according to claim 1, wherein the molten salt comprises, as cation, the sodium ion as well as the quaternary ammonium ion in which R¹, R², R³ and R⁴ of formula (2) are the same or different from each other and each of them is alkyl group having 1-6 carbon atoms.

3. The molten-salt battery according to claim 1, wherein the molten salt comprises, as cation, the sodium ion as well as the imidazolium ion in which one of R⁵ and R⁶ of formula (3) is the methyl group and the other one is the alkyl group having 1-6 carbon atoms.

4. The molten-salt battery according to claim 1, wherein the molten salt comprises, as cation, the sodium ion as well as the pyrrolidinium ion in which one of R¹⁰ and R¹¹ of formula (6) is the methyl group and the other one is the alkyl group having 1-6 carbon atoms.

5. The molten-salt battery according to claim 1, wherein the molten salt comprises, as cation, the sodium ion as well as the piperidinium ion in which one of R¹² and R¹³ of formula (7) is the methyl group and the other one is the alkyl group having 1-6 carbon atoms.

6. The molten-salt battery according to any one of claims 1 to 5, comprising a positive electrode that contains NaCrO₂ as a positive-electrode material and a negative electrode that contains tin, sodium or a carbon material as a negative-electrode active material.

## Patentansprüche

1. Salzschmelze-Batterie, in der ein geschmolzenes Salz, das Natriumionen als Kation enthält, als Elektrolyt verwendet wird, wobei das geschmolzene Salz als Anion ein Ion umfasst, dessen allgemeine chemische Strukturformel durch die nachstehende Formel (1) dargestellt ist: 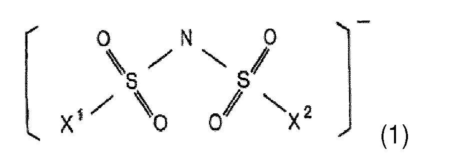 worin X¹ und X² gleich oder voneinander verschieden sind und jeweils eine Fluorgruppe oder eine Fluoralkylgruppe sind und als Kation das Natriumion sowie zumindest ein organisches Kation umfasst, das in einer organischen Kationengruppe eingeschlossen ist, bestehend aus:
einem quartären Ammoniumion, dessen allgemeine chemische Strukturformel durch die nachstehende Formel (2) dargestellt ist: 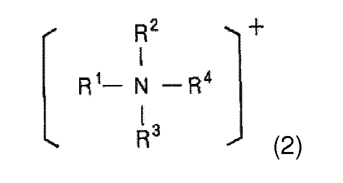 worin R¹, R², R³ und R⁴ gleich oder voneinander verschieden sind und jeweils eine Alkylgruppe mit 1 bis 8 Kohlenstoffatomen oder eine Alkyloxyalkylgruppe mit 1 bis 8 Kohlenstoffatomen sind;
einem Imidazoliumion, dessen chemische Strukturformel durch die nachstehende Formel (3) dargestellt ist: 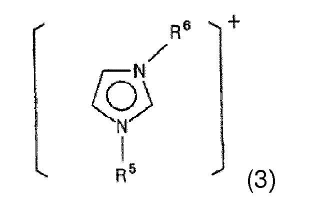 worin R⁵ und R⁶ gleich oder voneinander verschieden sind und jeweils eine Alkylgruppe mit 1 bis 8 Kohlenstoffatomen darstellen;
einem Imidazoliumion, dessen chemische Strukturformel durch die nachstehende Formel (4) dargestellt ist: 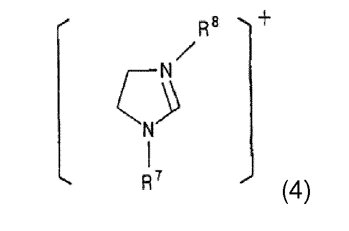 worin R⁷ und R⁸ gleich oder voneinander verschieden sind und jeweils eine Alkylgruppe mit 1 bis 8 Kohlenstoffatomen darstellen;
einem Pyridiniumion, dessen chemische Strukturformel durch die nachstehende Formel (5) dargestellt ist: 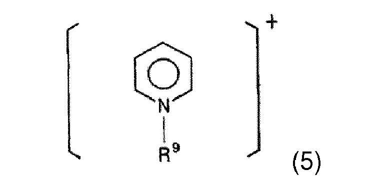 worin R⁹ eine Alkylgruppe mit 1 bis 8 Kohlenstoffatomen ist;
einem Pyrrolidiniumion, dessen chemische Strukturformel durch die nachstehende Formel (6) dargestellt ist: 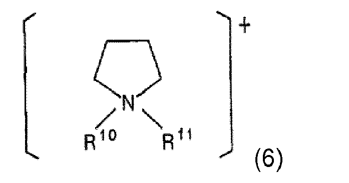 worin R¹⁰ und R¹¹ gleich oder voneinander verschieden sind und jeweils eine Alkylgruppe mit 1 bis 8 Kohlenstoffatomen darstellen;
einem Piperidiniumion, dessen chemische Strukturformel durch die nachstehende Formel (7) dargestellt ist: 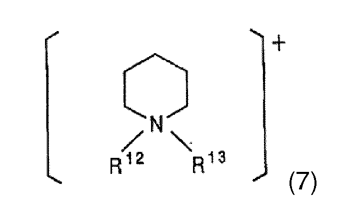 worin R¹² und R¹³ gleich oder voneinander verschieden sind und jeweils eine Alkylgruppe mit 1 bis 8 Kohlenstoffatomen darstellen;
einem Morpholiniumion, dessen chemische Strukturformel durch die nachstehende Formel (8) dargestellt ist: 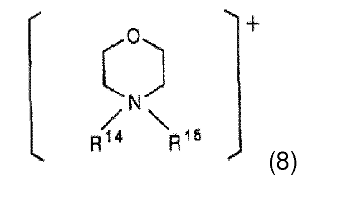 worin R¹⁴ und R¹⁵ gleich oder voneinander verschieden sind und jeweils eine Alkylgruppe mit 1 bis 8 Kohlenstoffatomen darstellen;
einem Phosphoniumion, dessen chemische Strukturformel durch die nachstehende Formel (9) dargestellt ist: 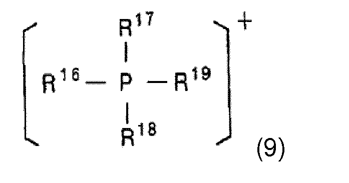 worin R¹⁶, R¹⁷, R¹⁸ und R¹⁹ gleich oder voneinander verschieden sind und jeweils eine Alkylgruppe mit 1 bis 8 Kohlenstoffatomen, eine Alkyloxyalkylgruppe mit 1 bis 8 Kohlenstoffatomen oder eine Phenylgruppe sind;
einem Piperaziniumion, dessen chemische Strukturformel durch die nachstehende Formel (10) dargestellt ist: 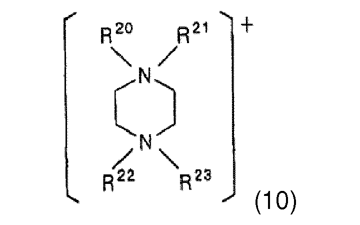 worin R²⁰, R²¹, R²² und R²³ gleich oder voneinander verschieden sind und jeweils eine Alkylgruppe mit 1 bis 8 Kohlenstoffatomen sind; und
einem Sulfoniumion, dessen chemische Strukturformel durch die nachstehende Formel (11) dargestellt ist: 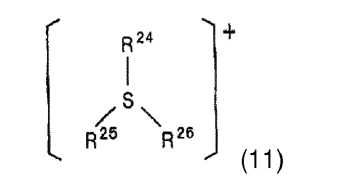 worin R²⁴, R²⁵ und R²⁶ gleich oder voneinander verschieden sind und jeweils eine Alkylgruppe mit 1 bis 8 Kohlenstoffatomen sind, **dadurch gekennzeichnet, dass** das geschmolzene Salz weder Kaliumionen noch Cäsiumionen enthält.

2. Salzschmelze-Batterie gemäss Anspruch 1, wobei das geschmolzene Salz als Kation das Natriumion sowie das quartäre Ammoniumion umfasst, worin R¹, R², R³ und R⁴ in Formel (2) gleich oder voneinander verschieden sind und jeweils eine Alkylgruppe mit 1 bis 6 Kohlenstoffatomen sind.

3. Salzschmelze-Batterie gemäss Anspruch 1, wobei das geschmolzene Salz als Kation das Natriumion sowie das Imidazoliumion umfasst, worin eines von R⁵ und R⁶ in Formel (3) eine Methylgruppe und das andere eine Alkylgruppe mit 1 bis 6 Kohlenstoffatomen ist.

4. Salzschmelze-Batterie gemäss Anspruch 1, wobei das geschmolzene Salz als Kation das Natriumion sowie das Pyrrolidiniumion umfasst, worin eines von R¹⁰ und R¹¹ in Formel (6) eine Methylgruppe und das andere eine Alkylgruppe mit 1 bis 6 Kohlenstoffatomen ist.

5. Salzschmelze-Batterie gemäss Anspruch 1, wobei das geschmolzene Salz als Kation das Natriumion sowie das Piperidiniumion umfasst, worin eines von R¹² und R¹³ in Formel (7) eine Methylgruppe und das andere eine Alkylgruppe mit 1 bis 6 Kohlenstoffatomen ist.

6. Salzschmelze-Batterie gemäss irgendeinem der Ansprüche 1 bis 5, die eine positive Elektrode, die NaCrO₂ als positives Elektrodenmaterial enthält, und eine negative Elektrode, die Zinn, Natrium oder ein Kohlenstoffmaterial als negatives Elektrodenmaterial enthält, umfasst.

## Revendications

1. Batterie à sel fondu dans laquelle un sel fondu contenant un ion sodium en tant que cation est utilisé pour un électrolyte, dans laquelle le sel fondu comprend, en tant qu'anion, un ion, as anion, an ion, dont la formule structurale chimique générale est représentée par la formule suivante (1) 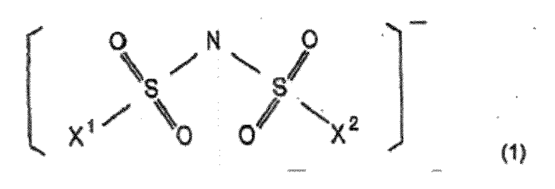 dans laquelle X¹ et X² sont mutuellement identiques ou différents, et chacun d'eux est un groupe fluoro ou un groupe fluoroalkyle, et comprend, en tant que cation, l'ion sodium ainsi qu'au moins un cation organique compris dans un groupe de cations organiques constitué de : un ion ammonium quaternaire, dont la formule structurale chimique est représentée par la formule suivante (2) 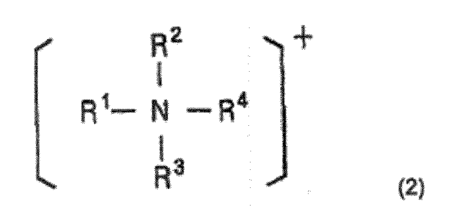 dans laquelle R¹, R², R³ et R⁴ sont mutuellement identiques ou différents, et chacun d'entre eux est un groupe alkyle ayant 1 à 8 atomes de carbone ou un groupe alkyloxyalkyle ayant 1 à 8 atomes de carbone ; un ion imidazolium, dont la formule structurale chimique est représentée par la formule suivante (3) 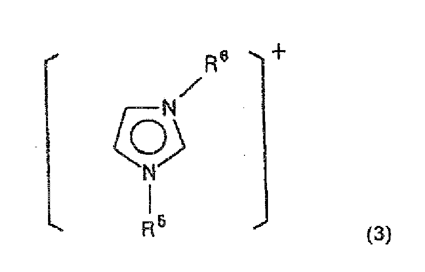 dans laquelle R⁵ et R⁶ sont mutuellement identiques ou différents, et chacun d'entre eux est un groupe alkyle ayant 1 à 8 atomes de carbone ; un ion imidazolium, dont la formule structurale chimique est représentée par la formule suivante (4) 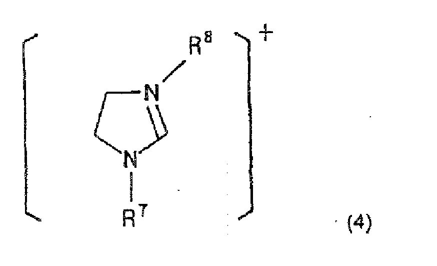 dans laquelle R⁷ et R⁸ sont mutuellement identiques ou différents, et chacun d'entre eux est un groupe alkyle ayant 1 à 8 atomes de carbone ; un ion pyridinium, dont la formule structurale chimique est représentée par la formule suivante (5) 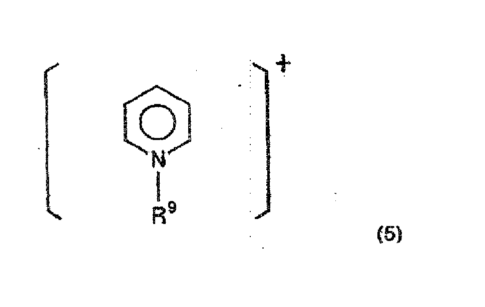 dans laquelle R⁹ est un groupe alkyle ayant 1 à 8 atomes de carbone ; un ion pyrrolidinium, dont la formule structurale chimique est représentée par la formule suivante (6) 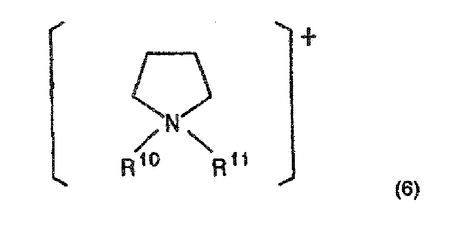 dans laquelle R¹⁰ et R¹¹ sont mutuellement identiques ou différents, et chacun d'entre eux est un groupe alkyle ayant 1 à 8 atomes de carbone ; un ion pipéridinium, dont la formule structurale chimique est représentée par la formule suivante (7) 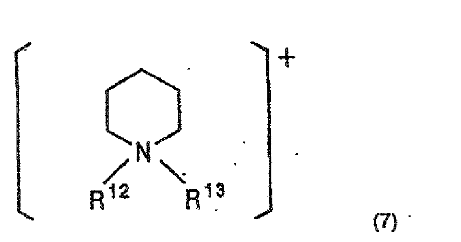 dans laquelle R¹² et R¹³ sont mutuellement identiques ou différents, et chacun d'entre eux est un groupe alkyle ayant 1 à 8 atomes de carbone ; un ion morpholinium, dont la formule structurale chimique est représentée par la formule suivante (8) 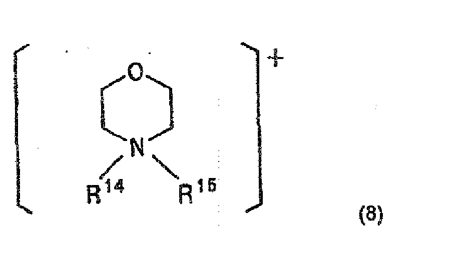 dans laquelle R¹⁴ et R¹⁵ sont mutuellement identiques ou différents, et chacun d'entre eux est un groupe alkyle ayant 1 à 8 atomes de carbone ; un ion phosphonium, dont la formule structurale chimique est représentée par la formule suivante (9) 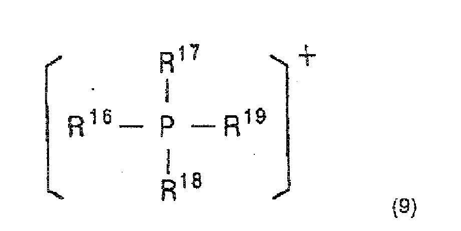 dans laquelle R¹⁶, R¹⁷ R¹⁸ et R¹⁹ sont mutuellement identiques ou différents, et chacun d'entre eux est un groupe alkyle ayant 1 à 8 atomes de carbone, un groupe alkyloxyalkyle ayant 1 à 8 atomes de carbone ou un groupe phényle ; un ion pipérazinium, dont la formule structurale chimique est représentée par la formule suivante (10) 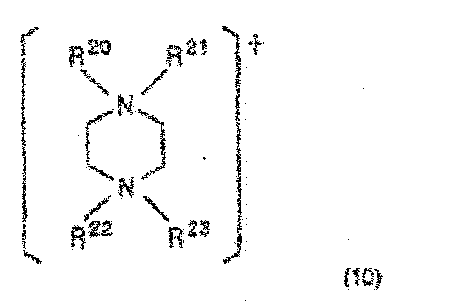 dans laquelle R²⁰, R²¹, R²² et R²³ sont mutuellement identiques ou différents, et chacun d'entre eux est un groupe alkyle ayant 1 à 8 atomes de carbone ; et un ion sulfonium, dont la formule structurale chimique est représentée par la formule suivante (11) 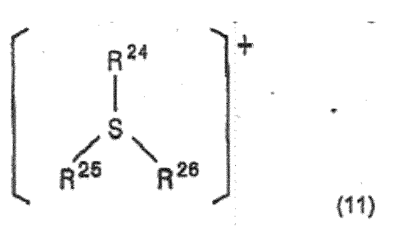 dans laquelle R²⁴, R²⁵ et R²⁶ sont mutuellement identiques ou différents, et chacun d'entre eux est un groupe alkyle ayant 1 à 8 atomes de carbone, **caractérisée en ce que** le sel fondu ne contient ni des ions potassium, ni des ions césium.

2. Batterie à sel fondu selon la revendication 1, dans laquelle le sel fondu comprend, en tant que cation, l'ion sodium ainsi que l'ion ammonium quaternaire dans lequel R¹, R², R³ et R⁴ de la formule (2) sont mutuellement identiques ou différents et chacun d'entre eux est un groupe alkyle ayant 1 à 6 atomes de carbone.

3. Batterie à sel fondu selon la revendication 1, dans laquelle le sel fondu comprend, en tant que cation, l'ion sodium ainsi que l'ion imidazolium dans lequel l'un de R⁵ et R⁶ de la formule (3) est le groupe méthyle et l'autre est le groupe alkyle ayant 1 à 6 atomes de carbone.

4. Batterie à sel fondu selon la revendication 1, dans laquelle le sel fondu comprend, en tant que cation, l'ion sodium ainsi que l'ion pyrrolidinium dans lequel l'un de R¹⁰ et R¹¹ de la formule (6) est le groupe méthyle et l'autre est le groupe alkyle ayant 1 à 6 atomes de carbone.

5. Batterie à sel fondu selon la revendication 1, dans laquelle le sel fondu comprend, en tant que cation, l'ion sodium ainsi que l'ion pipéridinium dans lequel l'un de R¹² et R¹³ de la formule (7) est le groupe méthyle et l'autre est le groupe alkyle ayant 1 à 6 atomes de carbone.

6. Batterie à sel fondu selon l'une quelconque des revendications 1 à 5, comprenant une électrode positive qui contient NaCrO₂ en tant que matériau d'électrode positive et une électrode négative qui contient de l'étain, du sodium ou un matériau de carbone en tant que matériau actif d'électrode négative.
